# EUROPÄISCHE PATENTSCHRIFT

(11) **EP 2 318 277 B1**
(45) Veröffentlichungstag und Bekanntmachung des Hinweises auf die Patenterteilung: **20.03.2013**
(21) Anmeldenummer: 09781760.5
(22) Anmeldetag: 12.08.2009
(51) Int. Cl.: B64D 13/06

(54) **ZONENTEMPERATURREGELUNG AN BORD EINES FLUGZEUGES MITTELS BRENNSTOFFZELLENABWÄRME**
ZONE TEMPERATURE CONTROL ON BOARD AN AIRPLANE BY MEANS OF FUEL CELL WASTE HEAT
RÉGULATION DE LA TEMPÉRATURE PAR ZONE À BORD D'UN AVION AU MOYEN DE LA CHALEUR DISSIPÉE PAR UNE PILE À COMBUSTIBLE

(30) Priorität: 26.08.2008 DE 102008039782; 26.08.2008 US 190082 P
(43) Veröffentlichungstag der Anmeldung: 11.05.2011
(73) Patentinhaber: Airbus Operations GmbH, 21129 Hamburg (DE)
(72) Erfinder: ARENDT, Martin, 38527 Meine (DE); MARQUARDT, Till, 22299 Hamburg (DE); WESTENBERGER, Andreas, 21614 Buxtehude (DE); FRAHM, Lars, 20357 Hamburg (DE)
(74) Vertreter: Kopf, Korbinian Paul
(86) Internationale Anmeldenummer: PCT/EP2009/060447
(87) Internationale Veröffentlichungsnummer: WO 2010/026024

(56) Entgegenhaltungen:
- WO-A1-2007/028622
- WO-A1-2008/014912
- DE-A1-102006 045 755
- DE-C1- 4 308 466
- GB-A- 2 398 864

## Beschreibung

### TECHNISCHES GEBIET

Die Erfindung betrifft ein Klimatisierungssystem für ein Verkehrsmittel, ein Verfahren zum unterschiedlichen Klimatisieren von Zonen in einer Kabine eines Verkehrsmittels, die Verwendung eines Klimatisierungssystems in einem Verkehrsmittel sowie ein Flugzeug mit mindestens einem derartigen Klimatisierungssystem.

### HINTERGRUND DER ERFINDUNG

Kabinen von Verkehrsmitteln werden zur individuellen Temperaturregulierung häufig in mehrere Zonen eingeteilt, die bevorzugt jeweils über eine eigene Luftzuleitung verfügen, welche Luft mit individuell vorgegebenen Parametern, wie etwa die Temperatur, in die jeweilige Zone leitet. Beispielsweise sind in modernen Verkehrsflugzeugen häufig Klimatisierungssysteme anzutreffen, die die Flugzeugkabine in mehreren Zonen unterschiedlich klimatisiert. Die Luftaufbereitung wird jedoch derart vollzogen, dass von einer einzigen zentralen Einrichtung aufbereitete Luft mit einer festgelegten Temperatur bereitgestellt wird. Da mittels dieser Luft sämtliche Zonen innerhalb der Kabine des Verkehrsflugzeugs individuell klimatisiert werden sollen, ist es erforderlich, dass die Luft die niedrigste von den Zonen angeforderte Temperatur aufweist, da in den unterschiedlichen Zonen keine Möglichkeiten zur nachträglichen Kühlung existieren. Dies hat jedoch zur Folge, dass Zonen mit einer höheren Temperaturforderung eine zusätzliche Erwärmung der Zuluft in Anspruch nehmen müssen. Diese zusätzliche Wärme wird üblicherweise in Form von heißer Zapfluft aus den Triebwerken realisiert, die dem Luftstrom aus dem Klimatisierungssystem zugeführt wird. Alternativ dazu werden auch dezentrale elektrische Heizeinrichtungen installiert, die zum Erwärmen der Zuluft verwendet werden.

DE 10 2006 045 755 B4 zeigt eine Klimaanlage für ein Kraftfahrzeug, bei der über eine Stelleinrichtung erwärmte Luft aus einer elektrischen Heizeinrichtung in die Luftführung eingemischt werden kann.

GB 2 398 864 A zeigt ein Klimatisierungssystem und ein Verfahren zum Testen eines derartigen Klimatisierungssystems, bei der zwei Wärmetauscher und mehrere Volumenstromsensoren Verwendung finden.

DE 43 08 466 C1 zeigt ein Klimatisierungssystem für ein Passagierflugzeug, das mehrere Klimazonen besitzt, die mit einzelnen Luftverteilsystemen und einer Zonenkontrolleinrichtung in Verbindung gebracht werden, wobei über ein Temperatur-Regelsystem in jeder Klimazone eine Zumischung heißer Zapfluft erfolgt.

### ZUSAMMENFASSUNG DER ERFINDUNG

Beim Beispiel des Verkehrsflugzeugs ist es nachteilig, durch ein Klimatisierungssystem bereits gekühlte und aufbereitete Luft nachträglich und unter Energieaufwendung wieder zu erwärmen. Zur Zeit sind Klimatisierungssysteme verbreitet, die ausschließlich oder zu einem größten Teil mittels Zapfluft aus den Triebwerken betrieben werden, so dass eine weitere nachträgliche Entnahme von Zapfluft zur Erwärmung der aufwändig gekühlten Luft eine relativ ungünstige Energiebilanz nach sich zieht. Da weiterhin auch zusätzlich oder alternativ dazu verwendete elektrische Heizgeräte ebenfalls einen nicht unerheblichen Stromverbrauch haben, der ebenfalls in einem Treibstoffmehrverbrauch resultiert, ist ein Klimatisierungssystem wie vorstehend beschrieben keine optimale Lösung.

Die Aufgabe der Erfindung ist, ein Klimatisierungssystem vorzuschlagen, bei dem eine Mehrzonenklimatisierung unter einem möglichst geringen Treibstoffmehrbrauch ermöglicht wird. Insbesondere ist Aufgabe der Erfindung, ein Klimatisierungssystem vorzuschlagen, bei dem weder eine zusätzliche Entnahme heißer Zapfluft noch eine elektrische Zuheizung alleinig zum Bereitstellen einer Mehrzonenklimatisierung erforderlich ist.

Die Aufgabe wird gelöst durch ein Klimatisierungssystem für ein Verkehrsmittel mit den vorgenannten Merkmalen, wobei das Klimatisierungssystem ferner mindestens einen Wärmetauscher mit einem ersten und einem zweiten Eingang sowie einem ersten Ausgang aufweist, wobei der erste Eingang mit einer Zuluftleitung verbunden ist, der zweite Eingang mit einer Abgasleitung einer Brennstoffzelle verbunden ist und der erste Ausgang mit dem Trimmluftverteiler verbunden ist und dazu eingerichtet ist, aus der Wärme des Abgases der Brennstoffzelle die in den Trimmluftverteiler einströmende Zuluft zu erwärmen. Vorteilhaft bei einem solchen Klimatisierungssystem ist die Tatsache, dass die Abwärme einer häufig in modernen Verkehrsflugzeugen vorzufindende bzw. in die Konzeption eines solchen einbezogenen Brennstoffzelle sinnvoll genutzt werden kann, anstatt sie einfach nur an die Umgebung abzugeben. Die in den Trimmluftleitungen abgeführte erwärmte Luft ist in der Lage, die Zonen durch individuelles Einstellen der Trimmluftventile individuell zu heizen, wobei keine elektrische Zuheizung oder eine zusätzliche Entnahme von Zapfluft erforderlich ist. Dies steigert die Effektivität der Energieversorgung im Flugzeug erheblich, da gleichzeitig eine Brennstoffzelle gekühlt werden kann und die daraus abfallenden Wärme ohne energetischen Mehraufwand zur Erwärmung von Zuluft in die einzelnen Kabinenzonen genutzt wird.

Besonders bevorzugt wird die Zuluftleitung am ersten Eingang der Brennstoffzelle mit Luft aus der Kabine versorgt. Dies ist dadurch besonders vorteilhaft, da diese Luft bereits "verbraucht" ist und üblicherweise ohnehin zu einem Teil - beispielsweise 40 % - in die Kabine zurückgeführt und dort weiter verwendet wird. Diese rückzuführende (rezirkulierte) Luft kann dann - zumindest teilweise - durch den Wärmetauscher erwärmt und über die Trimmluftleitungen zurück in die Kabine gelangen. Dadurch wird der Energieverbrauch weiter gesenkt und der Kraftstoffverbrauch wird weiter gesenkt.

Ferner ist besonders bevorzugt, dass die Brennstoffzelle eine Mitteltemperatur-Brennstoffzelle ist. Mitteltemperatur-Brennstoffzellen sind im Aufbau und im Betrieb einfacher als Niedertemperatur-Brennstoffzellen, sehr effektiv und dadurch für den Betrieb in einem Verkehrsmittel besonders geeignet, in dem begrenzter Bauraum zur Verfügung steht und ein lediglich begrenztes Transportgewicht realisiert werden kann. Mitteltemperatur-Brennstoffzellen haben eine Betriebstemperatur zwischen 90°C und ca. 220°C. Sie sind unempfindlicher gegenüber Verunreinigungen und durch die höhere Betriebstemperatur einfacher zu kühlen als Niedertemperatur-Brennstoffzellen. Aus gleichem Grund kann es weiterhin auch vorteilhaft sein, eine Hochtemperatur-Brennstoffzelle vorzusehen, die eine Betriebstemperatur von mehr als 220°C aufweist.

Andererseits kann es jedoch auch vorteilhaft sein, wenn die Brennstoffzelle eine Niedertemperatur-Brennstoffzelle ist, deren Betrieb zwar im Hinblick auf die Reinheit der Brennstoffe und der erzielten Leistung nicht optimal sein könnte, jedoch auch für den Betrieb in einem Verkehrsmittel aufgrund der niedrigeren zu erwartenden Temperaturen in Frage kommt. Bei der Verwendung einer Niedertemperatur-Brennstoffzelle muss allerdings ein höherer Luftvolumenstrom durch den Wärmetauscher bereitgestellt werden, damit eine ausreichende Erhöhung der Luft in den Zonenluftleitungen realisiert werden kann. Niedertemperatur-Brennstoffzellen haben eine Betriebstemperatur zwischen 60°C und 90°C.

In einer vorteilhaften Weiterbildung des erfindungsgemäßen Klimatisierungssystems sind in den Zonenluftleitungen Sensoren zum Bestimmen des Luftvolumenstroms angeordnet. Dies ermöglicht ein Feststellen der in den einzelnen Zonen angeforderten Luftvolumenströme, auf die die Trimmluftvolumenströme zum Erreichen einer vorbestimmten Endtemperatur in den einzelnen Zonen abgestimmt werden können.

Dadurch ist es auch vorteilhaft, wenn ein erfindungsgemäßes Klimatisierungssystem ferner mindestens eine Regeleinrichtung aufweist, die mit den Sensoren und den Trimmluftventilen verbunden ist. Dadurch kann gleichzeitig der Luftvolumenstrom in den Zonenluftleitungen bestimmt und die Trimmluftströme über die Trimmluftventile darauf angepasst werden.

Weiterhin ist es vorteilhaft, wenn das erfindungsgemäße Klimatisierungssystem mindestens eine zusätzliche Heizeinrichtung zum Erwärmen der in den Trimmluftleitungen und/oder in den Zonenluftleitungen transportierten Luft aufweist. Für den Fall, dass eine in einem Verkehrsmittel integrierte Brennstoffzelle lediglich als Notversorgung, zur Versorgung an einer Basis oder bei Verkehrsflugzeugen am Boden verwendet wird, könnte in bestimmten Fahr- oder Flugphasen eine entsprechende Brennstoffzellenabwärme gänzlich fehlen. In diesen Phasen könnte durch eine zusätzliche Heizeinrichtung eine derartige Betriebsphase überbrückt werden, wobei in der Gesamtbilanz der Energieverbrauch deutlich vorteilhafter ist als im Stand der Technik, wo generell über eine zusätzliche Heizung oder dergleichen eine Erhöhung der Lufttemperatur erreicht wird.

Die Aufgabe wird weiterhin durch ein Verfahren zum individuellen Klimatisieren von Zonen in einer Kabine eines Verkehrsmittels gelöst. Weiterhin wird die Aufgabe durch eine Verwendung eines Klimatisierungssystems mit den vorgenannten Merkmalen in einem Verkehrsmittel gelöst sowie durch ein Flugzeug mit mindestens einer Brennstoffzelle und mindestens einem Klimatisierungssystem mit den vorgenannten Merkmalen.

### KURZE BESCHREIBUNG DER ZEICHNUNGEN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbeziehungen. In den Figuren stehen weiterhin gleiche Bezugszeichen für gleiche oder ähnliche Objekte. Es zeigen:
- Fig. 1:: schematische Ansicht eines Klimatisierungssystems aus dem Stand der Technik;
- Fig. 2:: schematische Ansicht eines erfindungsgemäßen Klimatisierungssystems; und
- Fig. 3:: eine schematische Ansicht eines erfindungsgemäßen Verfahrens.

### DETAILLIERTE DARSTELLUNG EXEMPLARISCHER AUSFÜHRUNGSFORMEN

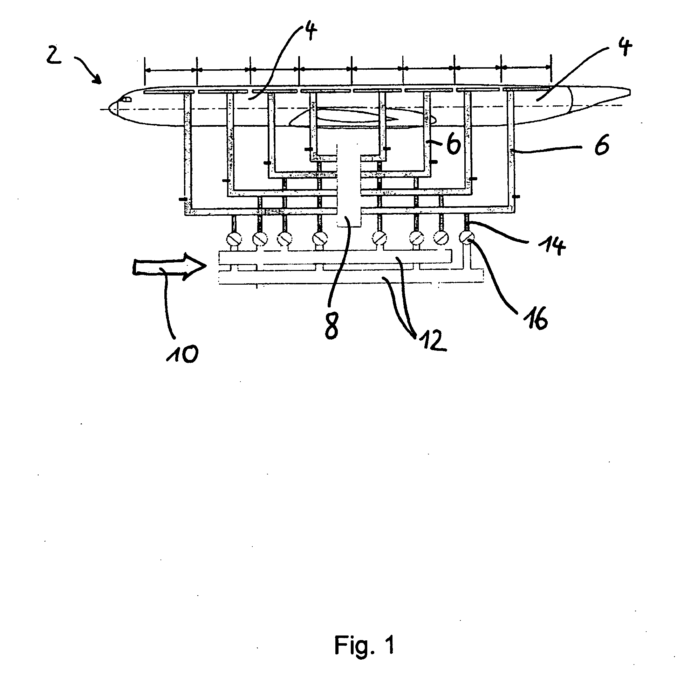

Fig. 1 zeigt ein Flugzeug 2 aus dem Stand der Technik, das über 8 verschiedene Zonen 4 verfügt, die auf unterschiedliche Weise klimatisiert werden können. In die einzelnen Zonen 4 wird Luft über Zonenluftleitungen 6 eingeleitet, die über eine Mischkammer bzw. Mischeinheit 8 mit Luft versorgt werden. In der Mischeinheit 8 wird entsprechend aufbereitete Frischluft mit verbrauchter Kabinenluft aus den einzelnen Zonen 4 vermischt und zur weiteren Klimatisierung der Zonen 4 verwendet. Damit die einzelnen Zonen 4 individuell klimatisiert werden können, ist es erforderlich, die mit der Mischeinheit 8 zur Verfügung gestellte Luft so einzustellen, dass sie die niedrigste von den unterschiedlichen Zonen 4 angeforderte Temperatur aufweist. Dies können beispielsweise 18°C sein. Zum Erhöhen dieser Lufttemperatur wird relativ warme Zapfluft 10 verwendet, die über einen oder mehrere Trimmluftverteiler 12 an mehrere Trimmluftleitungen 14 über jeweils ein Trimmluftventil 16 verteilt wird. Die Trimmluftleitungen 14 sind mit den Zonenluftleitungen 6 verbunden und dazu eingerichtet, warme Zapfluft 10 in den jeweiligen Volumenstrom einer zugeordneten Zonenluftleitung 6 zu mischen, so dass sich die in den einzelnen Zonen 4 ankommende Lufttemperatur auf das gewünschte Maß erhöht hat. Die Regelung der Temperatur in den einzelnen Zonen 4 erfolgt über die Trimmventile 16, die beispielsweise als Regelventile ausgeführt sein können, die über eine Regeleinheit (nicht dargestellt) oder dergleichen angesteuert werden können.

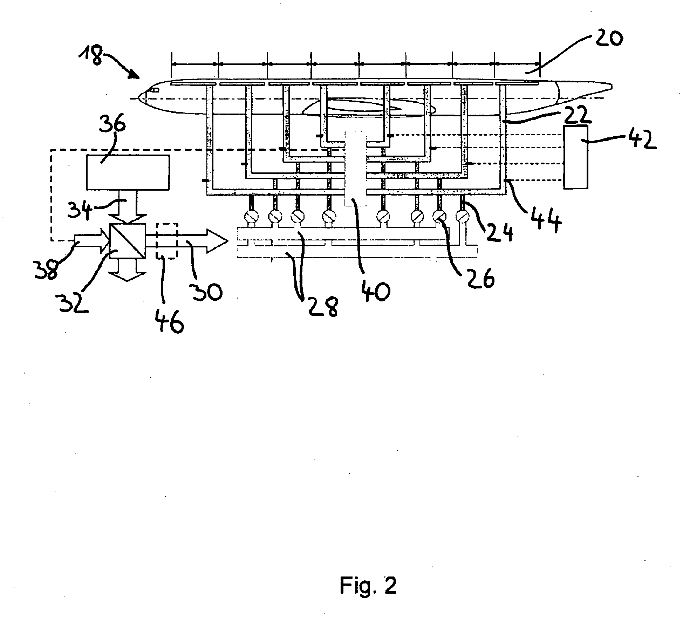

Der Nachteil dieses Klimatisierungssystems nach dem Stand der Technik liegt darin begründet, dass bereits gekühlte Luft aus der Mischeinheit 8 wieder mit den Triebwerken entnommener Zapfluft 10 auf ein höheres Temperaturniveau gebracht werden muss. Dadurch wird sowohl beim Kühlen als auch beim nachträglichen Wiedererwärmen Energie verbraucht, was durch das erfindungsgemäße Klimatisierungssystem behoben werden kann, wie nachfolgend anhand Fig. 2 näher beschrieben wird.

Hier weist ein Flugzeug 18 ebenfalls 8 verschiedene Zonen 20 auf, die jeweils über Zonenluftleitungen 22 mit Luft versorgt werden. Den Zonenluftleitungen 22 sind jeweils Trimmluftleitungen 24 zugeordnet, die über Trimmluftventile 26 Luft aus einem oder mehreren Trimmluftverteilern 28 beziehen. Die Trimmluftverteiler 28 werden versorgt durch erwärmte Luft 30, die aus einem Wärmetauscher 32 stammt, der mit Abgasen 34 einer Brennstoffzelle 36 durchströmt wird. Die in den Wärmetauscher 32 einströmende Zuluft 38 wird bevorzugt der aus den verschiedenen Zonen 20 gebildeten Kabine entnommen, da diese Luft bereits "verbraucht" ist und ohnehin zu einem Teil in eine Mischeinheit 40 und darüber zurück in die Zonen 20 geleitet wird.

Bevorzugt weist das erfindungsgemäße Klimatisierungssystem eine Regeleinheit 42 auf, die mit Durchflusssensoren 44 in den Zonenluftleitungen 22 verbunden ist. Dadurch kann die Regeleinheit 42 feststellen, welche Luftvolumenströme in den Zonenluftleitungen 22 vorhanden sind und kann, in Abhängigkeit von den gewünschten Temperaturen in den Zonen 20, die jeweiligen Trimmventile 26 dementsprechend einstellen. Durch Einstellen der Trimmventile 26 wird das Mischungsverhältnis zwischen der warmen Luft 30 aus dem Wärmetauscher 32 und Luft aus der Mischeinheit 40 eingestellt.

Bei Verwendung einer Mitteltemperatur-Brennstoffzelle ist ein niedrigerer Trimmluftvolumenstrom durch den Wärmetauscher 32 einzustellen als bei Verwendung einer Niedertemperatur-Brennstoffzelle. Dies kommt dadurch, dass die Abgastemperatur einer Niedertemperatur-Brennstoffzelle deutlich geringer ist als die einer Mitteltemperatur-Brennstoffzelle, die beispielsweise Temperaturen von 200°C oder mehr erreichen kann. Eine Niedertemperatur-Brennstoffzelle produziert Abgase, die lediglich eine Temperatur von bis zu 90°C aufweisen.

Sollte die Brennstoffzelle in einigen Betriebsphasen nicht verfügbar sein, könnte eine zusätzliche Heizeinrichtung 46 für die Bereitstellung erwärmter Luft 30 für die Trimmluftleitungen 24 verwendet werden. In Betracht kommen etwa elektrische Zuheizer jeglicher Bauart.

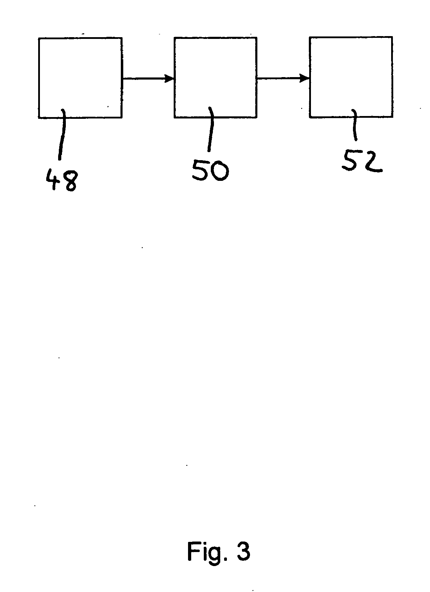

In Fig. 3 wird schematisch das Verfahren zum individuellen Klimatisieren von Zonen in einer Kabine eines Verkehrsmittels zusammengefasst. Prinzipiell wird Luft über die Zonenluftleitungen in die Zonen abgegeben 48, Zuluft wird durch die Abwärme der Brennstoffzelle erwärmt 50 und bedarfsweise über Trimmluftleitungen und Trimmventile in die Zonenluftleitungen abgegeben 52, um die Temperatur in den einzelnen Zonen zu erhöhen.

Zusammenfassend ist das erfindungsgemäße Klimatisierungssystem in der Lage, eine energetisch besonders vorteilhafte Mehrzonenklimatisierung in einem Verkehrsmittel bereitzustellen, bei dem der Mehrverbrauch an Energie und/oder Treibstoff deutlich reduziert oder sogar gänzlich eliminiert wird.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### BEZUGSZEICHEN

- 2: Flugzeug
- 4: Zone
- 6: Zonenluftleitung
- 8: Mischeinheit
- 10: Zapfluft
- 12: Zapfluftverteiler
- 14: Trimmluftleitung
- 16: Trimmventil
- 18: Flugzeug
- 20: Zone
- 22: Zonenluftleitung
- 24: Trimmluftleitung
- 26: Trimmventil
- 28: Trimmluftverteiler
- 30: erster Ausgang Brennstoffzelle/erwärmte Luft
- 32: Wärmetauscher
- 34: Abgas(-leitung) Brennstoffzelle
- 36: Brennstoffzelle
- 38: Zuluft(-leitung)
- 40: Mischeinheit
- 42: Regeleinheit
- 44: (Volumenstrom-)Sensor
- 46: Heizeinrichtung
- 48: Abgeben von Luft in die Zonen
- 50: Erwärmen von Zuluft durch Abwärme der Brennstoffzelle
- 52: Wahlweise Abgeben von Trimmluft

## Patentansprüche

1. Klimatisierungssystem für ein Verkehrsmittel, wobei das Verkehrsmittel mindestens eine Kabine mit einer oder mehreren zu klimatisierenden Zonen (20) besitzt, aufweisend
- eine oder mehrere Zonenluftleitungen (22) zum Abgeben von aufbereiteter Luft in die Zonen,
- eine oder mehrere Trimmluftleitungen (24),
- ein oder mehrere Trimmluftventile (26) und
- mindestens einen Trimmluftverteiler (28),
wobei den Zonenluftleitungen (22) jeweils mindestens eine Trimmluftleitung (24) zugeordnet ist, die an die zugeordnete Zonenluftleitung (22) über ein Trimmluftventil (26) wahlweise erwärmte Trimmluft zum Erhöhen der Lufttemperatur in der Zonenluftleitung (22) abgibt, wobei die Trimmluftleitungen (24) ferner mit mindestens einem Luftausgang des Trimmluftverteilers (28) verbunden sind,
wobei das Klimatisierungssystem ferner mindestens einen Wärmetauscher (32) mit einem ersten und einem zweiten Eingang sowie einem ersten Ausgang aufweist, wobei der erste Eingang mit einer Zuluftleitung (38) verbunden ist, **dadurch gekennzeichnet, dass** der zweite Eingang mit einer Abgasleitung (34) einer Brennstoffzelle (36) verbunden ist und der erste Ausgang (30) mit dem Trimmluftverteiler (28) verbunden ist und dazu eingerichtet ist, aus der Wärme des durch den Wärmetauscher (32) strömenden Abgases der Brennstoffzelle (36) die über den ersten Ausgang (30) in den Trimmluftverteiler (28) einströmende Zuluft aus dem ersten Eingang zu erwärmen.

2. Klimatisierungssystem nach Anspruch 1, **dadurch gekennzeichnet, dass** die Zuluftleitung (38) am ersten Eingang der Brennstoffzelle (36) mit Luft aus der Kabine versorgt wird.

3. Klimatisierungssystem nach Anspruch 1 oder 2, **dadurch gekennzeichnet, dass** die Brennstoffzelle (36) eine Mitteltemperatur-Brennstoffzelle ist.

4. Klimatisierungssystem nach einem der Ansprüche 1 oder 2, **dadurch gekennzeichnet, dass** die Brennstoffzelle (36) eine Niedertemperatur-Brennstoffzelle ist.

5. Klimatisierungssystem nach einem der Ansprüche 1 oder 2, **dadurch gekennzeichnet, dass** die Brennstoffzelle (36) eine Hochtemperatur-Brennstoffzelle ist.

6. Klimatisierungssystem nach einem der vorhergehenden Ansprüche, **dadurch gekennzeichnet, dass** in den Zonenluftleitungen (22) Sensoren (44) zum Bestimmen des Luftvolumenstroms angeordnet sind.

7. Klimatisierungssystem nach Anspruch 6, **dadurch gekennzeichnet, dass** das Klimatisierungssystem ferner mindestens eine Regeleinrichtung (42) aufweist, die mit den Sensoren (44) und den Trimmluftventilen (26) verbunden ist.

8. Klimatisierungssystem nach einem der vorhergehenden Ansprüche, **dadurch gekennzeichnet, dass** das Klimatisierungssystem mindestens eine zusätzliche Heizeinrichtung (46) zum Erwärmen der in den Trimmluftleitungen (24) und/oder in den Zonenluftleitungen (22) transportierten Luft aufweist.

9. Verfahren zum individuellen Klimatisieren von Zonen in einer Kabine eines Verkehrsmittels, bei dem eine oder mehrere Zonenluftleitungen (22) Luft in die Zonen (20) abgeben (48), wobei den Zonenluftleitungen (22) jeweils mindestens eine Trimmluftleitung zugeordnet wird, die an die zugeordnete Zonenluftleitung (22) über ein Trimmluftventil (26) wahlweise erwärmte Trimmluft zum Erhöhen der Lufttemperatur in der Zonenluftleitung (22) abgibt (52), wobei die Trimmluftleitungen (14) ferner mit mindestens einem Luftausgang des Trimmluftverteilers (28) verbunden werden,
**dadurch gekennzeichnet, dass** die Abgase einer Brennstoffzelle (36) über einen zweiten Eingang durch einen Wärmetauscher (32) geleitet wird und in den Trimmluftverteiler (28) über den Wärmetauscher (32) einströmende Zuluft aus einem ersten Eingang und durch einen ersten Ausgang nach Bedarf der jeweiligen Zone (20) erwärmt (50).

10. Verwendung eines Klimatisierungssystems nach einem der Ansprüche 1-8 in einem Verkehrsmittel.

11. Verwendung nach Anspruch 9, wobei das Verkehrsmittel ein Flugzeug (18) ist.

12. Flugzeug mit mindestens einer Brennstoffzelle (36) und mindestens einem Klimatisierungssystem nach einem der Ansprüche 1-8.

## Claims

1. An environmental control system for a means of transport, wherein the means of transport has at least one cabin comprising one or several zones (20) to be air conditioned, comprising
- one or several zone-air lines (22) for delivering conditioned air to the zones,
- one or several trim-air lines (24),
- one or several trim-air valves (26), and
- at least one trim-air distributor (28),
wherein in each case at least one trim-air line (24) is associated with the zone-air lines (22), which trim-air line (24) optionally, by way of a trim-air valve (26), delivers heated trim air for increasing the air temperature in the zone-air line (22) to the associated zone-air line (22), wherein the trim-air lines (24) are further connected to at least one air outlet of the trim-air distributor (28),
wherein the environmental control system further comprises at least one heat exchanger (32) with a first and a second inlet as well as a first outlet, wherein the first inlet is connected to a supply air line (38),
**characterised in that** the second inlet is connected to an exhaust gas line (34) of a fuel cell (36), and the first outlet (30) is connected to the trim-air distributor (28) and is designed from the heat of the exhaust gas flowing through the heat exchanger (32) of the fuel cell (36) to heat the supply air from the first inlet flowing into the trim-air distributor (28) via the first outlet (30).

2. The environmental control system of claim 1, **characterized in that** the supply air line (38) on the first inlet of the fuel cell (36) is supplied with air from the cabin.

3. The environmental control system of claim 1 or 2, **characterized in that** the fuel cell (36) is a medium-temperature fuel cell.

4. The environmental control system of one of claims 1 or 2, **characterized in that** the fuel cell (36) is a low-temperature fuel cell.

5. The environmental control system of one of claims 1 or 2, **characterized in that** the fuel cell (36) is a high-temperature fuel cell.

6. The environmental control system of any one of the preceding claims, **characterized in that** in the zone-air lines (22) sensors (44) are arranged for determining the air volume flow.

7. The environmental control system of claim 6, **characterized in that** the environmental control system furthermore comprises at least one control device (42) which is connected to the sensors (44) and to the trim-air valves (26).

8. The environmental control system of any one of the preceding claims, **characterized in that** the environmental control system comprises at least one additional heating device (46) for heating the air conveyed in the trim-air lines (24) and/or in the zone-air lines (22).

9. A method for individually air conditioning zones in a cabin of a means of transport, in which method one or several zone-air lines (22) deliver (48) air into the zones (20), wherein in each case at least one trim-air line is associated with the zone-air lines (22), which trim-air line optionally, by way of a trim-air valve (26), delivers (52) heated trim air for increasing the air temperature in the zone-air line (22), wherein the trim-air lines (14) are further connected to at least one air outlet of the trim-air distributor (28),
**characterized in that** the exhaust gas of a fuel cell (36) is lead through a heat exchanger (32) via a second inlet and heats (50) supply air that flows into the trim-air distributor (28) by way of a heat exchanger (32) from a first inlet and through a first outlet when required by the respective zone (20).

10. The use of an environmental control system of any one of claims 1-8 in a means of transport.

11. The use of claim 9, wherein the means of transport is an aircraft (18).

12. An aircraft comprising at least one fuel cell (36) and at least one environmental control system of any one of claims 1-8.

## Revendications

1. Système de climatisation pour un moyen de transport, le moyen de transport présentant au moins une cabine avec une ou plusieurs zones à climatiser (20), comportant :
- une ou plusieurs conduites d'air de zone (22) pour émettre l'air conditionné dans les zones,
- une ou plusieurs conduites d'air d'équilibrage (24),
- une ou plusieurs valves d'air d'équilibrage (26) et
- au moins un diffuseur d'air d'équilibrage (28),
au moins une conduite d'air d'équilibrage (24) étant associée à chaque conduite d'air de zone (22), qui émet au choix, via une valve d'air d'équilibrage (26), à la conduite d'air de zone (22) associée de l'air d'équilibrage réchauffé pour augmenter la température de l'air dans la conduite d'air de zone (22),
les conduites d'air d'équilibrage (24) étant en outre raccordées à au moins une sortie d'air du diffuseur d'air d'équilibrage (28),
le système de climatisation présentant en outre au moins un échangeur de chaleur (32) avec une première et une seconde entrée ainsi qu'une première sortie, la première entrée étant raccordée à une conduite d'air frais (38),
**caractérisé par le fait que**
la seconde entrée est raccordée à une conduite de gaz d'échappement (34) d'une pile à combustible (36) et
la première sortie (30) est raccordée au diffuseur d'air d'équilibrage (28) et agencée pour réchauffer, à partir de la chaleur du gaz d'échappement s'écoulant à travers l'échangeur de chaleur (32) de la pile à combustible (36), l'air frais s'écoulant depuis la première entrée via la première sortie (30) dans le diffuseur d'air d'équilibrage (28).

2. Système de climatisation selon la revendication 1, **caractérisé par le fait que** la conduite d'air frais (38) à la première entrée de la pile à combustible (36) est alimentée en air provenant de la cabine.

3. Système de climatisation selon la revendication 1 ou 2, **caractérisé par le fait que** la pile à combustible (36) est une pile à combustible moyenne température.

4. Système de climatisation selon l'une des revendications 1 ou 2, **caractérisé par le fait que** la pile à combustible (36) est une pile à combustible basse température.

5. Système de climatisation selon l'une des revendications 1 ou 2, **caractérisé par le fait que** la pile à combustible (36) est une pile à combustible haute température.

6. Système de climatisation selon l'une des revendications précédentes, **caractérisé par le fait que** des capteurs (44) sont disposés dans les conduites d'air de zone (22) pour déterminer le débit volumique d'air.

7. Système de climatisation selon la revendication 6, **caractérisé par le fait que** le système de climatisation présente en outre au moins un dispositif de régulation (42), qui est raccordé aux capteurs (44) et aux valves d'air d'équilibrage (26).

8. Système de climatisation selon l'une des revendications précédentes, **caractérisé par le fait que** le système de climatisation présente au moins un dispositif de chauffage (46) supplémentaire pour réchauffer l'air transporté dans les conduites d'air d'équilibrage (24) et/ou dans les conduites d'air de zone (22).

9. Procédé de climatisation individuelle de zones dans une cabine d'un moyen de transport, dans lequel une ou plusieurs conduites d'air de zone (22) émettent (48) de l'air dans les zones (20), au moins une conduite d'air d'équilibrage étant associée à chaque conduite d'air de zone (22), qui émet (52) au choix à la conduite d'air de zone (22) associée via une valve d'air d'équilibrage (26) de l'air d'équilibrage réchauffé pour augmenter la température de l'air dans la conduite d'air de zone (22), les conduites d'air d'équilibrage (14) étant en outre raccordées à au moins une sortie d'air du diffuseur d'air d'équilibrage (28), **caractérisé par le fait que** les gaz d'échappement d'une pile à combustible (36) sont guidés via une seconde entrée à travers un échangeur de chaleur (32) et réchauffent (50) l'air frais s'écoulant, depuis une première entrée et à travers une première sortie en fonction des besoins de la zone (20) correspondante, dans le diffuseur d'air d'équilibrage (28) via l'échangeur de chaleur (32).

10. Utilisation d'un système de climatisation selon l'une des revendications 1 à 8 dans un moyen de transport.

11. Utilisation selon la revendication 9, le moyen de transport étant un avion (18).

12. Avion avec au moins une pile à combustible (36) et au moins un système de climatisation selon l'une des revendications 1 à 8.
